# FASCICULE DE BREVET EUROPEEN

(11) **EP 3 746 682 B1**
(45) Date de publication et mention de la délivrance du brevet: **09.03.2022**
(21) Numéro de dépôt: 19703960.5
(22) Date de dépôt: 29.01.2019
(51) Int. Cl.: F16H 61/36, F16C 1/22

(54) **EMBOUT DE CABLE ET DISPOSITIF DE REGLAGE DE CABLE DE COMMANDE SUR UNE BOITE DE VITESSES**
KABELENDE UND VORRICHTUNG ZUR EINSTELLUNG EINES STEUERKABELS BEI EINEM GETRIEBE
CABLE END AND DEVICE FOR ADJUSTING A CONTROL CABLE ON A GEARBOX

(30) Priorité: 31.01.2018 FR 1850765
(43) Date de publication de la demande: 09.12.2020
(73) Titulaire: Renault s.a.s, 92100 Boulogne Billancourt (FR)
(72) Inventeur: JACOTA, Veronel George, 135200 GAESTI (RO)
(74) Mandataire: Renault Group
(86) Numéro de dépôt international: PCT/EP2019/052092
(87) Numéro de publication internationale: WO 2019/149687

(56) Documents cités:
- FR-A1- 2 922 614
- FR-A1- 2 974 603
- US-A- 4 903 541

## Description

La présente invention se rapporte à la fixation des embouts de câble de sélection de vitesses, sur un levier de commande interne de boîte de vitesses.

Plus précisément, elle a pour objet un embout de câble de sélection de commande externe de boîte de vitesses, comportant un corps d'embout qui reçoit l'extrémité d'une tige de commande raccordée à un sélecteur de vitesses, de manière à pouvoir régler la position de celle-ci sur l'embout, et une partie de fixation sur un levier de commande interne de la boîte. Un exemple d'un tel embout est connu de FR2922614 A1.

Elle a également pour objet un dispositif de réglage d'un câble de commande externe de boîte de vitesses sur un levier de commande interne, ainsi qu'un procédé de réglage en position, d'une tige d'extrémité de câble de commande externe, sur un levier de commande interne.

Les embouts de câble de commande de boîte de vitesses doivent rattraper les jeux entre la commande externe de la boîte, et sa commande interne, en superposant la position neutre dans la boîte de vitesses, avec la position neutre du boitier commande externe.

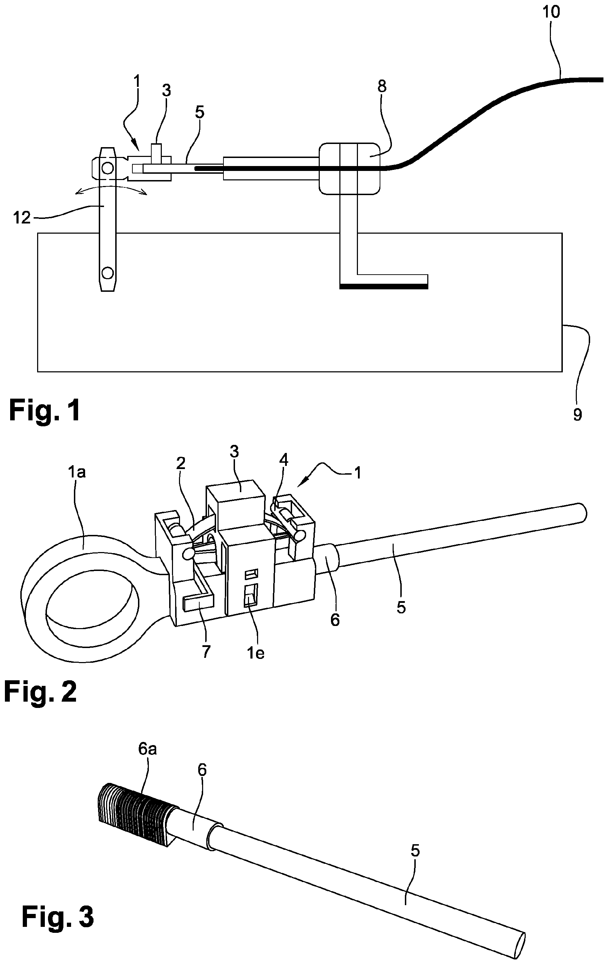

Sur une commande de vitesses, telle qu'illustrée par la figure 1, la distance entre un embout de gaine 8 rigidement fixé sur un carter de boîte 9, et un embout de câble 1 monté sur l'extrémité d'un levier de commande 12, doit être en concordance avec la distance fonctionnelle imposée par la commande interne de boîte, avant de montage de la commande externe de boîte de vitesses sur un véhicule, en usine. Pour cela, l'extrémité du câble de sélection 10 ne peut pas être bloquée initialement par rapport à l'embout de câble 1. L'embout de câble 1, qui appartient à la commande externe, ne peut donc pas être déjà lié cinématiquement avec la commande interne de la boîte, lors de son montage sur le levier 12.

Dans l'exemple illustré par la figure 1, la distance entre l'embout de gaine 8 et l'embout de câble 1 est déterminée seulement après la fixation de l'embout de câble sur le levier 12. Un bouton 3 est poussé pour bloquer la tige 5 en fonction de sa distance avec l'embout de câble. Le bouton 3 a par exemple une denture intérieure qui rend solidaire l'embout de câble 1 et la tige 5.

De nombreux embouts de câble connus, utilisés sur les véhicules automobiles, comportent un ressort hélicoïdal exerçant une poussée longitudinale sur l'extrémité du câble ou d'une tige de commande. L'immobilisation en position de la tige sur l'embout, requiert des moyens de blocage additionnels, encombrants et coûteux.

La présente invention vise à s'affranchir de ces solutions complexes, en tirant meilleur parti de l'élasticité d'un ressort pour faciliter le réglage et l'immobilisation de la tige sur l'embout.

Dans ce but, elle propose un nouvel embout de câble comprenant un ressort à lame basculant sous la poussée d'un bouton, introduit sur l'embout, entre une première position où la tige peut se déplacer longitudinalement à l'intérieur de l'embout pour effectuer le réglage, et une deuxième position, où le bouton assure le maintien en position de la tige dans la position de réglage à l'intérieur de l'embout.

Le dispositif de réglage comprend un embout de câble et une tige de commande réglable dans l'embout, qui est raccordée à l'extrémité du câble en sortie d'un embout de gaine immobilisé sur le carter de la boîte de vitesses.

Au montage, on retire une cale de verrouillage de l'embout de câble, et on pousse un bouton sur l'embout, pour surmonter la résistance élastique d'un ressort.

D'autres caractéristiques et avantages de l'invention, ressortiront clairement à la lecture de la description suivante d'un mode de réalisation non limitatif de celle-ci, en se reportant aux dessins annexés sur lesquels :
- la figure 1 illustre le montage d'une commande externe de boîte de vitesses sur un carter,
- la figure 2 est une vue d'un mode de réalisation préféré de l'invention,
- la figure 3 montre une tige de commande externe de boîte de vitesses,
- la figure 4 montre le corps du dispositif proposé,
- les figures 5A et 5B montrent l'articulation de son ressort,
- les figures 6 et 6A, montrent le bouton de connexion,
- les figures 7A et 7B montrent la cale de verrouillage,
- les figures 8A, 8B, 8C illustrent le fonctionnement du dispositif,
- les figures 9A, à 9D illustrent la disposition relative du bouton sur la tige, et
- les figures 10A et 10B montrent les deux positions fonctionnelles du ressort sur le bouton.

La description ci-dessous porte sur un mode de réalisation de l'invention, applicable sur une boîte de vitesses à six vitesses de marche avant, où le réglage initial du câble de sélection est indispensable.

L'embout de câble proposé 1 comprend un corps d'embout qui reçoit l'extrémité d'une tige de commande 5 raccordée à un sélecteur de vitesses, de manière à pouvoir régler la position de celle-ci sur l'embout, et une partie de fixation la de l'embout sur un levier de commande interne 12 de la boîte. Dans l'exemple de réalisation non limitatif qui est illustré par la figure 2, il comprend un anneau de fixation la, à l'extrémité du corps d'embout. L'anneau la est destiné à inclure un tampon de caoutchouc et une cage rotule pour se clipper sur la sphère d'extrémité du levier de boîte de vitesses, comme sur la figure 1. L'embout 1 comprend également un ressort à lame 2 à deux positions, et un bouton de verrouillage 3.

En position haute, le bouton 3 permet le réglage de la tige 5. En position basse, il assure sa fixation robuste, pour pouvoir transmettre le mouvement de la commande externe à la commande interne de la boîte. La position haute du bouton est utilisée pour transporter et manipuler le dispositif avant son montage en usine. Elle autorise le libre déplacement du câble et de sa tige d'extrémité. La position basse du bouton est adoptée pour immobiliser la tige dans l'embout. Elle est conservée en fonctionnement.

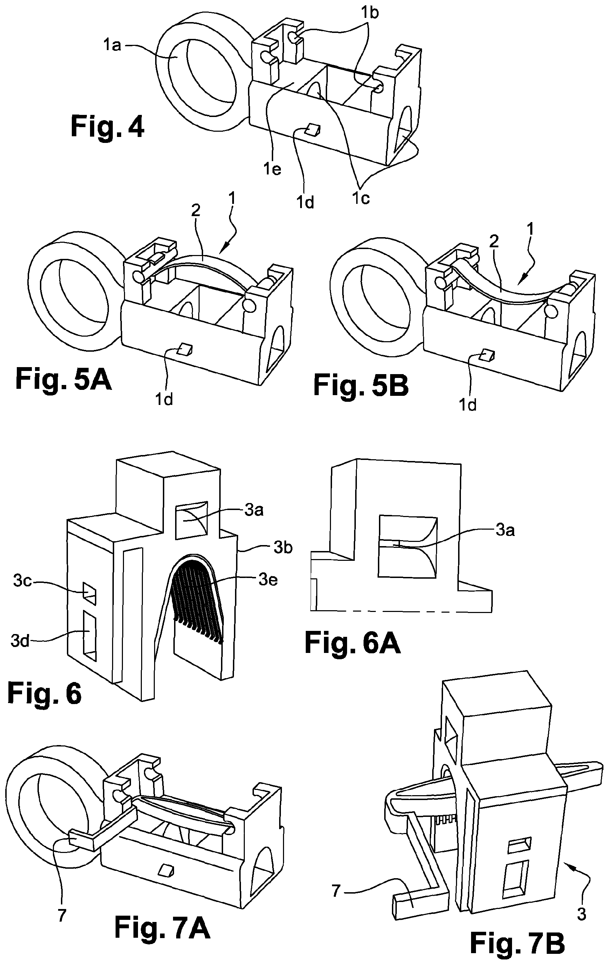

Conformément à l'invention, le ressort à lame 2 peut basculer sous la poussée du bouton introduit sur l'embout, entre une première position de transport et de réglage (figure 5A), et une deuxième position (figure 5B) de réglage et de fonctionnement. Il est articulé par ses deux extrémités sur l'embout, par les articulations 4, et bascule entre la première et la deuxième position, lors de l'enfoncement du bouton 3. La tige de commande 5 est engagée dans l'embout 1 par son extrémité 6, qui est revêtue d'un surmoulage. Enfin, l'embout 1 porte une cale de verrouillage 7 pour le transport et la manutention.

La tige de commande 5, qui est reproduite sur la figure 3 avec son surmoulage 6, transmet à l'embout 1 le mouvement du sélecteur (non représenté), actionné par le conducteur du véhicule. La tige 5 et son surmoulage issu de fabrication 6, forment une seule pièce au montage. Le bouton 3 présente un rainurage interne coopérant avec un rainurage externe 6a de l'extrémité surmoulée 6 de la tige. Ces rainures permettent de régler avec précision, l'extrémité de la tige 6 dans, le corps de l'embout le.

Sur la figure 4, on distingue quatre zones principales sur l'embout de câble 1 :
- un anneau d'articulation la avec le levier 12,
- une zone articulation 1b pour le ressort à lame 2,
- une zone de guidage axial 1c pour le surmoulage de la tige 5,
- un épaulement 1d de blocage du bouton 3.

Comme indiqué plus haut, le ressort à lame 2 a deux positions stables, haute et basse. Le bouton 3 est lié au corps de l'embout le dans la zone médiane du ressort 2. Le ressort est tiré, ou poussé, par la manœuvre du bouton 3. Lorsque la commande de vitesses est livrée en usine pour son montage sur la boîte de vitesses, le bouton 3 est en position haute. Après le montage, le bouton est poussé, pour immobiliser la tige 5, sur l'embout de câble 1. Sa fonction est de réaliser la connexion entre le ressort 2 et l'embout de câble 1. Il contient trois zones distinctes mises en évidence sur la figure 6, et sur son agrandissement partiel de la figure 6A
- une zone de contact et de guidage 3a, avec le ressort 2,
- une zone de denture 3b, complémentaire avec la denture 6a de la tige, et
- une fenêtre de blocage 3c, avec l'épaulement 1d de l'embout de câble 1.

La fenêtre de blocage 3c coopère avec l'épaulement 1d de l'embout de câble, pour bloquer le bouton 3 sur celui-ci en position enfoncée.

La cale 7 de verrouillage, mise en évidence sur les figures 7A et 7B, a pour fonction d'éviter l'enclenchement du bouton 3 pendant le transport de la commande, et en cours de manipulation. Elle verrouille le bouton 3 en position, pour interdire son enfoncement. Elle est soutenue par l'embout de câble 1, et empêche le bouton 3 de descendre. On la retire avant de pousser le bouton.

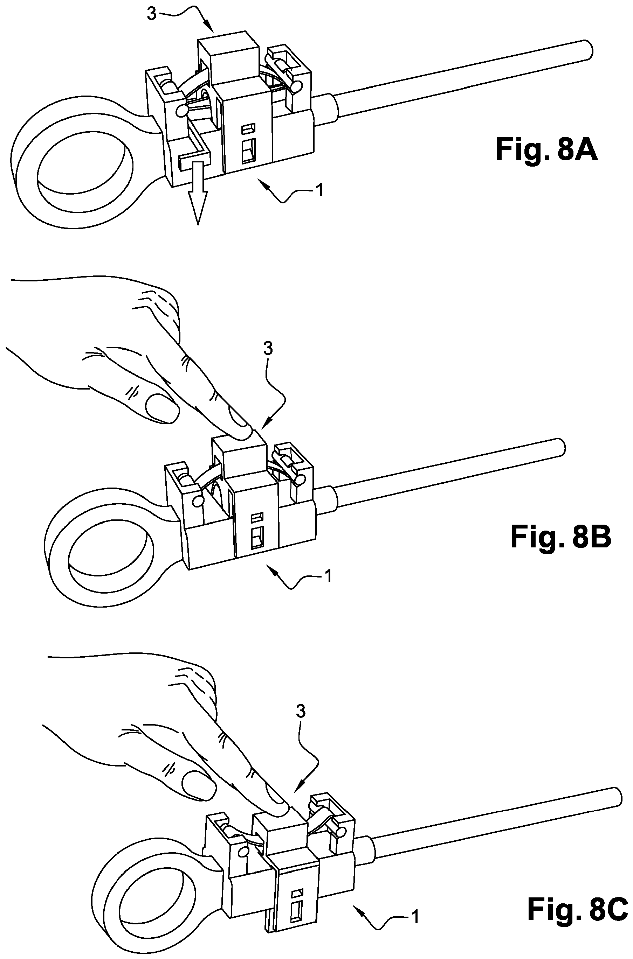

Pour effectuer le réglage, et assurer son maintien :
a) on retire la cale de verrouillage (figure 8A) ;
b) on pousse le bouton 3, pour surmonter la résistance élastique du ressort à lames 2 (figure 8B) ; au cours du mouvement, l'épaulement 1d de l'embout de câble, glisse dans la fente 3d du bouton, en lui permettant de se déplacer sur celui-ci ;
b) on pousse le bouton 3 sur l'embout 1 jusqu'à l'engagement de l'épaulement 1d de l'embout 1 dans la fenêtre de blocage 3c du bouton, pour bloquer celui-ci en position basse (figure 8C).

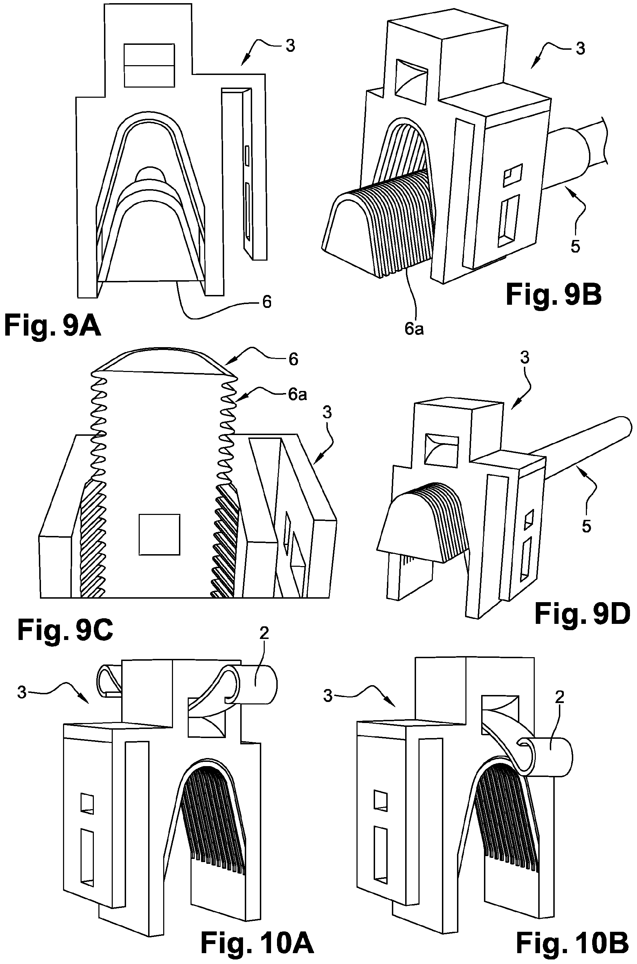

Les figures 9A et 9B illustrent l'agencement relatif du surmoulage 6 et du bouton 3 en position haute, et les figures 9C et 9D, leur agencement relatif en position basse. Enfin, les figures 10A et 10B illustrent l'agencement relatif du ressort 2 et de l'embout 1 dans ces deux positions.

Une fois le bouton enfoncé, la denture du bouton 3 est intercalée avec la denture complémentaire du surmoulage 6. L'effort axial dans la tige 5 est transféré vers le surmoulage 6. Il pousse sur la denture du bouton 3b. L'effort reçu est transmis à la surface frontale opposée 3e du bouton, qui pousse sur le du corps d'embout. L'effort de poussée est ainsi transmis de la commande externe de boite de vitesse au le levier de commande interne 12 de la boîte de vitesses.

Si le sens d'effort est inverse, la tige 5 tire le surmoulage 6, qui tire aussi la denture du bouton. La surface 3e du bouton pousse sur la face opposée de l'embout de câble. L'effort de traction de la commande externe de boîte de vitesses est transmis au levier de commande 12.

Le dispositif de réglage en position du câble de commande externe 10 de la boîte sur son levier de commande interne 12 comprend l'embout de câble 1 décrit ci-dessus, et la tige de commande 5, réglable dans l'embout 1. Dans l'exemple décrit, elle est raccordée à l'extrémité du câble 10 en sortie d'un embout de gaine 8, immobilisé sur le carter 9 de la boîte.

Parmi Les avantages de l'invention, il faut citer la simplicité, la robustesse, et son coût réduit. Il y a peu de pièces assembler, et leur assemblage est facile à réaliser, de même que le montage de l'embout sur le levier de boîte, et le réglage en position de la tige.

## Revendications

1. Embout de câble (1) de commande externe de boîte de vitesses (1), comportant un corps d'embout (le) qui reçoit l'extrémité d'une tige de commande (5) raccordée à un sélecteur de vitesses, de manière à pouvoir régler la position de celle-ci sur l'embout, et une partie de fixation (1a) de l'embout sur un levier de commande interne (12) de la boîte, **caractérisé en ce qu'**il comprend un ressort à lame (2) basculant sous la poussée d'un bouton (2) introduit sur l'embout, entre une première position où la tige (5) peut se déplacer longitudinalement à l'intérieur de l'embout (1), pour effectuer le réglage, et une deuxième position où le bouton (3) assure le maintien en position de la tige (5) dans la position de réglage à l'intérieur de l'embout.

2. Embout de câble (1) selon la revendication 1, **caractérisé en ce que** le ressort à lame (2) bascule entre une première position haute, et une deuxième position basse lors de l'enfoncement du bouton (3) .

3. Embout de câble (1) selon la revendication 1 ou 2, **caractérisé en ce que** le ressort à lame (2) est articulé par ses deux extrémités sur l'embout (1).

4. Embout de câble (1) selon la revendication 1, 2 ou 3, **caractérisé en ce que** le bouton (3) présente une fenêtre de blocage (3c) coopérant avec un épaulement (1d) de l'embout de câble (1) pour bloquer le bouton (3) sur l'embout.

5. Embout de câble (1) selon l'une des revendications précédentes, **caractérisé en ce qu'**il comprend une cale amovible (7) de verrouillage du bouton (3) en position, pour interdire son enfoncement pendant son transport et sa manutention.

6. Dispositif de réglage en position d'un câble de commande externe (10) de boîte de vitesses sur un levier de commande interne (12) de celle-ci, **caractérisé en ce qu'**il comprend un embout de câble (1) conforme à l'une des revendications précédentes et une tige de commande (5) réglable dans l'embout (1).

7. Dispositif de réglage selon la revendication 6, **caractérisé en ce que** la tige de commande (5) est raccordée à l'extrémité du câble (10) en sortie d'un embout de gaine (8) immobilisé sur le carter (9) de la boîte de vitesses.

8. Procédé de réglage en position d'une tige (5) d'extrémité de câble de commande externe (10) de boîte de vitesses sur un levier de commande interne (12) de celle-ci, avec un embout de câble (1) conforme à la revendication 5, **caractérisé en ce que** :
- on retire la cale de verrouillage (7) et
- on pousse le bouton (3) sur l'embout, pour surmonter la résistance élastique du ressort à lame (2).

9. Procédé de réglage selon la revendication 8, **caractérisé en ce qu'**on pousse le bouton (3) sur l'embout (1) jusqu'à l'engagement de l'épaulement (1d) de celui-ci dans la fenêtre de blocage (3c) du bouton, pour bloquer celui-ci en position basse.

## Patentansprüche

1. Kabelendstück (1) eines äußeren Getriebesteuerkabels (1), welches einen Endstückkörper (1e), welcher das Ende einer an einen Gangwähler angeschlossenen Steuerstange (5) aufnimmt, derart, dass die Position derselben an dem Endstück eingestellt werden kann, und einen Teil zur Befestigung (1a) des Endstücks an einem inneren Steuerhebel (12) des Getriebes umfasst, **dadurch gekennzeichnet, dass** es eine Blattfeder (2) umfasst, die unter der Schubwirkung einer Taste (2), die an dem Endstück eingeführt ist, zwischen einer ersten Position, in der sich die Stange (5) im Inneren des Endstücks (1) in Längsrichtung verschieben kann, um die Einstellung vorzunehmen, und einer zweiten Position, in der die Taste (3) das Halten der Stange (5) in der Einstellposition im Inneren des Endstücks sicherstellt, hin- und herschwingt.

2. Kabelendstück (1) nach Anspruch 1, **dadurch gekennzeichnet, dass** die Blattfeder (2) zwischen einer hohen ersten Position und einer niedrigen zweiten Position beim Drücken der Taste (3) schwingt.

3. Kabelendstück (1) nach Anspruch 1 oder 2, **dadurch gekennzeichnet, dass** die Blattfeder (2) mit ihren beiden Enden am Endstück (1) angelenkt ist.

4. Kabelendstück (1) nach Anspruch 1, 2 oder 3, **dadurch gekennzeichnet, dass** die Taste (3) ein Arretierfenster (3c) aufweist, das mit einem Ansatz (1d) des Kabelendstücks (1) zusammenwirkt, um die Taste (3) auf dem Endstück zu arretieren.

5. Kabelendstück (1) nach einem der vorhergehenden Ansprüche, **dadurch gekennzeichnet, dass** es einen entfernbaren Keil (7) zur Verriegelung der Taste (3) in ihrer Position umfasst, um ihr Niederdrücken während seines Transports und seiner Handhabung zu verhindern.

6. Vorrichtung zur Einstellung der Position eines äußeren Steuerkabels (10) eines Getriebes an einem inneren Steuerhebel (12) desselben, **dadurch gekennzeichnet, dass** sie ein Kabelendstück (1) gemäß einem der vorhergehenden Ansprüche und eine Steuerstange (5), die in dem Endstück (1) verstellbar ist, umfasst.

7. Vorrichtung zur Einstellung nach Anspruch 6, **dadurch gekennzeichnet, dass** die Steuerstange (5) an das Ende des Kabels (10) am Ausgang eines Hüllenendstücks (8) angeschlossen ist, das am Gehäuse (9) des Getriebes fixiert ist.

8. Verfahren zur Einstellung der Position einer Endstange (5) eines äußeren Steuerkabels (10) eines Getriebes an einem inneren Steuerhebel (12) desselben mit einem Kabelendstück (1) gemäß Anspruch 5, **dadurch gekennzeichnet, dass**:
- der Verriegelungskeil (7) zurückgezogen wird und
- die Taste (3) an das Endstück gedrückt wird, um den elastischen Widerstand der Blattfeder (2) zu überwinden.

9. Verfahren zur Einstellung nach Anspruch 8, **dadurch gekennzeichnet, dass** die Taste (3) an das Endstück (1) bis zum Einrasten des Ansatzes (1d) desselben in das Arretierfenster (3c) der Taste gedrückt wird, um diese in der niedrigen Position zu arretieren.

## Claims

1. End-fitting (1) of a cable for the external control of a gearbox (1), comprising an end-fitting body (1e) which receives the end of a control rod (5) connected to a gear selector, so as to be able to adjust the position thereof on the end-fitting, and a fastening part (1a) for fastening the end-fitting to an internal control lever (12) of the gearbox, **characterized in that** it comprises a leaf spring (2) which, when a button (2) fitted on the end-fitting is pushed, switches between a first position in which the rod (5) can move longitudinally inside the end-fitting (1), to perform the adjustment, and a second position in which the button (3) holds the rod (5) in the adjusted position inside the end-fitting.

2. Cable end-fitting (1) according to Claim 1, **characterized in that** the leaf spring (2) switches between a first upper position and a second lower position when the button (3) is depressed.

3. Cable end-fitting (1) according to Claim 1 or 2, **characterized in that** the leaf spring (2) is articulated by its two ends on the end-fitting (1).

4. Cable end-fitting (1) according to Claim 1, 2 or 3, **characterized in that** the button (3) has a locking window (3c) cooperating with a shoulder (1d) of the cable end-fitting (1) in order to lock the button (3) on the end-fitting.

5. Cable end-fitting (1) according to one of the preceding claims, **characterized in that** it comprises a removable locking wedge (7) for locking the button (3) in position, in order to prevent it from being depressed during transport and handling thereof.

6. Device for adjusting the position of an external control cable (10) of a gearbox on an internal control lever (12) thereof, **characterized in that** it comprises a cable end-fitting (1) according to one of the preceding claims and a control rod (5) which can be adjusted in the end-fitting (1).

7. Adjusting device according to Claim 6, **characterized in that** the control rod (5) is connected to the end of the cable (10) at the outlet of a sheath end-fitting (8) immobilized on the housing (9) of the gearbox.

8. Method for adjusting the position of an end rod (5) of an external control cable (10) of a gearbox on an internal control lever (12) thereof, with a cable end-fitting (1) according to Claim 5, **characterized in that**:
- the locking wedge (7) is removed, and
- the button (3) on the end-fitting is pushed in order to overcome the elastic resistance of the leaf spring (2).

9. Adjusting method according to Claim 8, **characterized in that** the button (3) on the end-fitting (1) is pushed until the shoulder (1d) thereof is engaged in the locking window (3c) of the button, in order to lock the latter in the lower position.
